# FASCICULE DE BREVET EUROPEEN

(11) **EP 1 708 501 B1**
(45) Date de publication et mention de la délivrance du brevet: **06.06.2012**
(21) Numéro de dépôt: 06112043.2
(22) Date de dépôt: 30.03.2006
(51) Int. Cl.: H04N 5/76

(54) **Procédé de génération d'un signal multimédia, signal multimédia, procédé et dispositif de restitution, moyens de stockage et programmes d'ordinateur correspondants**
Multimediasignalsbereitstellungsverfahren, Multimediasignal, Wiedergabe- verfahren und -gerät, Aufzeichnungsmedium und Datenverarbeitungsprogram
Method for generation of a multimedia signal, multimedia signal, reproducing method and apparatus and corresponding recording medium and computer program

(30) Priorité: 30.03.2005 FR 0550823
(43) Date de publication de la demande: 04.10.2006
(73) Titulaire: Jominet, Christine, 75012 Paris (FR)
(72) Inventeur: Ghibaudo, Frédéric, 75004 Paris (FR); Jominet, Christine, 94220 Charenton le Point (FR)

(56) Documents cités:
- EP-A- 0 508 939
- WO-A1-2005/069640
- AU-A- 2 144 283
- US-A- 4 771 344
- US-A- 5 398 070
- US-A- 6 152 829
- US-A1- 2004 015 983

## Description

### 1. Domaine de l'invention

Le domaine de l'invention est celui du multimédia. Plus précisément, l'invention concerne la restitution d'effets sensoriels, notamment dans un environnement audiovisuel. De tels effets sensoriels sont déjà connus de l'art antérieur. Ils comprennent en particulier, mais non exclusivement, la diffusion d'odeurs particulières. Ils sont généralement utilisés pour enrichir des programmes audio et/ou vidéo.

L'invention concerne plus particulièrement la génération et la mise en oeuvre d'un signal multimédia capable de piloter une restitution d'effets sensoriels.

L'invention s'applique notamment, mais non exclusivement, dans le cadre de projections publiques ou privées de films, de concerts musicaux, ...

### 2. Art antérieur

On connaît des méthodes de restitution d'effets sensoriels, notamment une méthode classique, selon laquelle les instructions de commande sensorielle sont enregistrées sur un support de données dans des zones d'enregistrement dédiées. Une telle méthode est notamment décrite dans le document de brevet international WO 94/08677.

Cette technique connue présente donc l'inconvénient de nécessiter une ou plusieurs pistes ou zones de stockage dédiées aux commandes d'activation d'appareils de restitution d'effets sensoriels. Pour cette raison, cette technique est mal adaptée pour les supports multimédias actuels (tels que les disques DVD, les cassettes vidéo numériques DV,...) qui ne disposent pas de telles zones. En d'autres termes, cette technique suppose de développer un nouveau standard, avec une piste spécifique, et de développer également des appareils de restitution spécifiques.

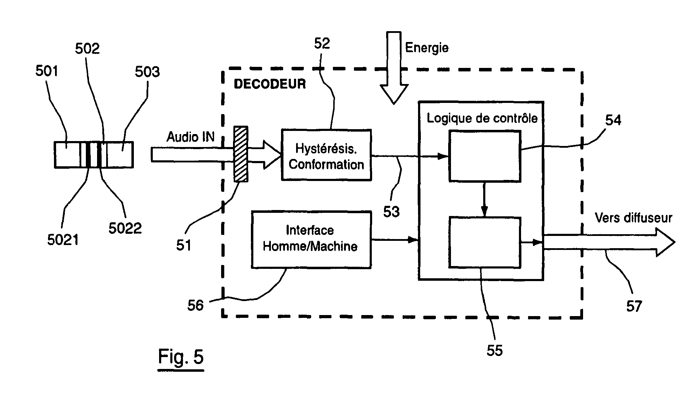

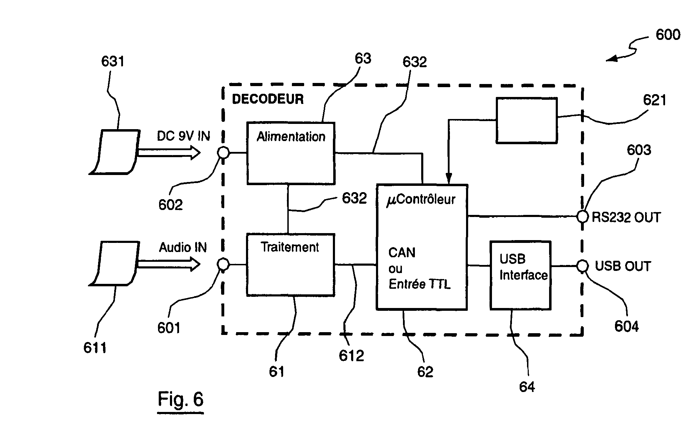

La technique décrite dans le document US 5 398 070 A (D1) a pour objectif principal de permettre la restitution d'odeurs lors de la diffusion d'un programme audiovisuel. Plus précisément, cette technique propose d'utiliser un signal audio/vidéo pour piloter des appareils de restitution d'effets sensoriels. Comme illustré par la figure 5, le signal audio/vidéo comprend un signal de synchronisation verticale, comprenant lui-même un signal de contrôle d'odeurs ("smell signal"). En référence a la figure 6, le signal de contrôle d'odeurs comprend une séquence de bits spécifique à la nature, l'intensité et le temps de diffusion d'une odeur.

### 3. Objectifs de l'invention

L'invention a notamment pour objectif de pallier ces inconvénients de l'art antérieur.

Plus précisément, un objectif de l'invention est de fournir une technique de restitution d'effets sensoriels qui soit simple à mettre en oeuvre et efficace, notamment en termes de synchronisation.

Un autre objectif de l'invention est de proposer une telle technique qui ne nécessite pas l'allocation de pistes ou de zones de stockage dédiées aux commandes sensorielles dans un support multimédia.

Encore un autre objectif de l'invention est de fournir une telle technique qui, dans au moins un mode de réalisation, permette la mise en oeuvre d'un signal audio et/ou vidéo capable de piloter une restitution temporelle d'effets sensoriels.

Un autre objectif de l'invention est de proposer une telle technique qui soit compatible avec les appareils multimédias et de restitution d'effet sensoriel existants.

L'invention a encore pour objectif de fournir une telle technique permettant d'activer en parallèle des appareils de restitution d'effet sensoriel de nature différente.

L'invention a également pour objectif de fournir une telle technique de restitution, qui soit simple de conception et peu coûteuse à réaliser.

Un objectif de l'invention est encore de fournir une telle technique qui, dans un mode de réalisation particulier, ne conduise pas à une modification lourde ou complexe des standards audio/vidéo actuels.

L'invention a également pour objectif de fournir une telle technique, qui permette une diffusion aisée des produits (supports multimédia complets).

### 4. Caractéristiques essentielles de l'invention

Ces objectifs, ainsi que d'autres qui apparaîtront par la suite, sont atteints à l'aide d'un procédé de génération d'un signal multimédia capable de piloter une restitution temporelle d'au moins un effet sensoriel dans un environnement audiovisuel, ledit signal multimédia comprenant au moins une voie portant des données audio et/ou vidéo.

Un tel procédé selon l'invention comprend une étape d'insertion dans au moins une desdites voies des trames de commande, dites trames sensorielles, parmi les données de ladite voie. Chacune desdites trames sensorielles comprend une séquence de bits de synchronisation et d'identification et au moins un champ de commande, de façon que des moyens de décodage traitant ladite voie restituent d'une part les données audio/vidéo qu'elle porte, et extraient lesdites trames sensorielles d'autre part, pour les diriger vers au moins un appareil de restitution sensorielle.

Ainsi, il n'est pas nécessaire de prévoir une piste spécifique, et donc de développer de nouveaux types d'appareils de lecture. Un appareil classique peut restituer classiquement le signal multimédia, les trames sensorielles étant de taille suffisamment réduite, et en nombre suffisamment faible, pour ne pas perturber la restitution du signal multimédia. Les trames sensorielles sont extraites et traitées soit par un module spécifique dédié, soit par l'appareil de lecture complet, s'il est prévu pour cela.

Le fait que les trames soient insérées dans un flux synchronisé permet d'assurer une synchronisation simple, précise et efficace des effets sensoriels.

Selon un aspect avantageux de l'invention, une trame sensorielle comprend une information d'aiguillage comprenant au moins un identifiant d'appareil de restitution d'effet sensoriel et/ou d'un élément d'un tel appareil.

De façon préférentielle, chaque trame sensorielle comprend au moins les champs suivants :
- au moins une information d'aiguillage, correspondant à un identifiant d'au moins appareil de restitution d'effet sensoriel, et/ou d'au moins un élément d'un tel appareil ;
- une information représentative d'une durée d'activation ; et
- une information représentative d'une intensité dudit effet sensoriel.

De façon avantageuse, chaque champ est codé sur un octet.

Dans un mode de réalisation préférentiel de l'invention, lesdites trames sensorielles sont codées selon un codage de Manchester.

L'invention concerne également un signal multimédia capable de piloter une restitution temporelle d'au moins un effet sensoriel dans un environnement audiovisuel. Le signal multimédia comprend au moins une voie portant des données audio et/ou vidéo. Selon l'invention, au moins une desdites voies porte des trames de commande, dites trames sensorielles, parmi les données de ladite voie, et chacune desdites commandes sensorielles comprend une séquence de bits de synchronisation et d'identification et au moins un champ de commande, de façon que des moyens de décodage traitant ladite voie restituent d'une part les données audio/vidéo qu'elle porte, et extraient lesdites trames sensorielles d'autre part, pour les diriger vers au moins un appareil de restitution sensorielle.

L'invention concerne aussi un moyen de stockage, éventuellement totalement ou partiellement amovible, contenant au moins un signal multimédia lisible par un ordinateur ou un appareil multimédia et généré selon le procédé de génération précité.

Avantageusement, ce moyen de stockage (par exemple un DVD) est associé à au moins un élément générateur d'au moins un effet sensoriel pilotable par lesdites trames de commande (par exemple un ensemble de capsules adaptées au film présent sur le DVD). Un boîtier adapté peut permettre de stocker l'ensemble.

L'invention concerne en outre un produit programme d'ordinateur comprenant des instructions de code de programme pour l'exécution des étapes du procédé de génération précité, lorsque ledit programme est exécuté sur un ordinateur.

L'invention concerne encore un moyen de stockage, éventuellement totalement ou partiellement amovible, lisible par un ordinateur, stockant un jeu d'instructions exécutables par ledit ordinateur pour mettre en oeuvre le procédé de génération précité.

Un autre aspect de l'invention concerne un procédé de restitution temporelle d'au moins un effet sensoriel dans un environnement multimédia. Un tel procédé selon l'invention comprend les étapes suivantes :
- réception d'un signal multimédia capable d'assurer une restitution temporelle d'au moins un effet sensoriel dans un environnement audiovisuel, ledit signal multimédia comprenant au moins une voie portant des données audio et/ou vidéo, au moins une desdites voies portant des trames de commande, dites trames sensorielles, parmi les données de ladite voie,
   chacune desdites commandes sensorielles comprenant une séquence de bits de synchronisation et d'identification et au moins un champ de commande ;
- détection d'une séquence de bits de synchronisation et d'identification dans ladite voie, et par conséquent d'une trame sensorielle ;
- extraction de la trame sensorielle détectée, et aiguillage vers au moins un appareil de restitution sensorielle et/ou au moins un élément d'un tel appareil.

Avantageusement, le procédé comprend une étape de validation desdites trames, par analyse d'au moins ladite séquence de bits de synchronisation et d'identification, délivrant une information de détection positive.

Préférentiellement, le procédé comprend une étape d'activation et/ou de paramétrage d'au moins un appareil de restitution d'effet sensoriel, en fonction de données délivrées par au moins un capteur de condition ambiante.

L'invention concerne également un dispositif de restitution temporelle d'au moins un effet sensoriel dans un environnement multimédia, comprenant :
- des moyens de réception d'un signal multimédia capable d'assurer une restitution temporelle d'au moins un effet sensoriel dans un environnement audiovisuel, ledit signal multimédia comprenant au moins une voie portant des données audio et/ou vidéo, au moins une desdites voies portant des trames de commande, dites trames sensorielles, parmi les données de ladite voie,
   chacune desdites commandes sensorielles comprenant une séquence de bits de synchronisation et d'identification et au moins un champ de commande ;
- des moyens de détection d'une séquence de bits de synchronisation et d'identification dans ladite voie, et par conséquent d'une trame sensorielle ;
- des moyens d'extraction de la trame sensorielle détectée, et aiguillage vers au moins un appareil de restitution sensorielle et/ou au moins un élément d'un tel appareil.

Ce dispositif peut être intégré dans un lecteur multimédia, si celui-ci a été prévu pour. Mais il peut également se présenter sous la forme d'un boîtier indépendant, capable de récupérer les flux utiles, en dérivation, sans perturber le fonctionnement d'un lecteur classique. Ainsi, il n'est pas nécessaire de disposer d'un lecteur multimédia spécifique et coûteux pour mettre en oeuvre l'invention.

Selon un aspect avantageux de l'invention, le dispositif comprend donc uniquement des moyens de récupération de ladite voie et de traitement desdites trames sensorielles, l'ensemble dudit signal multimédia étant traité indépendamment par des moyens de restitution d'un signal multimédia.

L'invention concerne en outre un produit programme d'ordinateur comprenant des instructions de code de programme pour l'exécution des étapes du procédé de restitution précité, lorsque ledit programme est exécuté sur un ordinateur.

L'invention concerne aussi un moyen de stockage, éventuellement totalement ou partiellement amovible, lisible par un ordinateur, stockant un jeu d'instructions exécutables par ledit ordinateur pour mettre en oeuvre le procédé de restitution précité.

### 5. Liste des figures

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :
- les figures 1A à 1D illustrent schématiquement :
   o figure 1A : la structure d'une trame sensorielle de l'invention ;
   o figure 1B : la structure d'un mot de commande de l'invention ;
   o figure 1C : la structure d'un mot de temporisation de l'invention ;
   o figure 1D : la structure d'un mot d'intensité de l'invention ;
- la figure 2 illustre de façon plus détaillée la structure d'un mode de réalisation particulier d'une trame sensorielle selon l'invention ;
- la figure 3 présente une machine à état d'un mode de réalisation particulier du procédé de réception d'une trame sensorielle de l'invention ;
- la figure 4 présente un organigramme d'un mode de réalisation particulier du procédé de décodage de l'invention ;
- la figure 5 présente un schéma synoptique simplifié d'un dispositif de restitution d'effet sensoriel de l'invention ;
- la figure 6 présente un schéma synoptique simplifié d'un dispositif de décodage de l'invention; et
- la figure 7 illustre le boîtier du dispositif de décodage de la figure 6 :
- la figure 8 illustre schématiquement une mise en oeuvre de l'invention.

### 6. Description d'un mode de réalisation de l'invention

Le principe général de l'invention repose sur la production d'un signal audio et/ou vidéo (dans un format standard), comprenant des trames de commande sensorielle, utilisée pour activer des appareils de restitution d'effets sensoriels. Ainsi selon l'invention, les trames de commande sensorielle (ou trames sensorielles) sont mêlées aux données multimédias, et non plus enregistrées dans des zones de stockage dédiées comme le proposent les techniques de l'art antérieur.

Par exemple, les trames sensorielles peuvent être insérées dans un flux audio, analogique ou numérique. Le faible nombre de ces trames, et leur faible taille (par exemple 4 octets) ne perturbe pas la restitution du signal audio de façon perceptible.

On peut prévoir également une technique d'aiguillage de données, permettant de restituer des données audio/vidéo classiques d'une part et des effets sensoriels d'autre part. Une telle technique d'aiguillage peut notamment commander en parallèle plusieurs appareils de restitution d'effet sensoriel de nature identique et/ou distincte.

### 6.1 Dispositif de restitution d'effet sensoriel

On décrit désormais en relation avec la figure 5 un exemple de dispositif de restitution d'effet sensoriel selon un mode de réalisation préférentiel de l'invention.

Dans ce mode de réalisation, le dispositif de restitution selon l'invention comprend :
- des moyens de réception 51 d'un signal multimédia 50 capable d'assurer une restitution temporelle d'un effet sensoriel dans un environnement audiovisuel. Le signal multimédia 50 comprend des voies, référencées 501 à 503, portant des données audio et/ou vidéo. La voie 502 porte en outre des trames sensorielles, référencées 5021 et 5022. Comme déjà indiqué, chacune des trames sensorielles 5021 et 5022 comprend une séquence de bits de synchronisation et d'identification et un champ de commande ;
- des moyens de traitement 52, de type classique en soi, recevant en entrée le signal multimédia 50 et délivrant en sortie un signal multimédia traité. Le traitement du signal multimédia 50 consiste en une mise en forme du signal par hystérésis, puis conformation (en signal logique 0 ou 1) ;
- des moyens de détection 54 d'une séquence de bits de synchronisation et d'identification dans une voie, et par conséquent d'une trame sensorielle ;
- des moyens d'extraction 55 de la trame sensorielle détectée, permettant l'aiguillage de la trame 57 vers un appareil de restitution sensorielle et/ou un élément (par exemple une capsule de parfum) d'un tel appareil ;
- une interface homme-machine 56, comprenant par exemple un clavier, un écran à cristaux liquides (LCD), un microphone,..., et permettant à un utilisateur de définir de manière autonome des ordres de commande et/ou d'activer manuellement l'appareil de restitution sensorielle et/ou un élément (par exemple une capsule de parfum) d'un tel appareil.

La figure 6 présente de façon plus détaillée la structure d'un dispositif de décodage 600 (aussi appelé boîtier décodeur) d'une trame sensorielle selon l'invention, qui comprend une unité de traitement 61 et un microcontrôleur (ou microprocesseur) 62, qui est piloté par un programme d'ordinateur (ou application) 621.

L'unité de traitement 61 reçoit via une première entrée 601 un signal audio 611 comprenant des trames de commande sensorielle, et délivre en sortie un signal audio traité 612. Le microcontrôleur 62 traite ce signal audio 612, selon les instructions du programme 621, pour extraire les trames de commande sensorielle et générer des commandes d'activation, qui sont transmises vers un appareil de restitution sensoriel (non représenté).

Le dispositif de décodage 600 comprend un module d'interface de sortie 64 permettant au dispositif de communiquer avec un appareil de restitution sensoriel via une liaison série 604 par exemple au format USB. Le dispositif 600 peut également communiquer avec un appareil de restitution sensoriel via une liaison série 603 par exemple au format RS232.

Le dispositif de décodage 600 comprend en outre un module d'alimentation 63, qui délivre une tension symétrique 632 (par exemple +/- 5V) compatible avec les circuits de technologie TTL, à partir d'une tension d'entrée continue 631 (par exemple de 9V) appliquée sur une deuxième entrée 601.

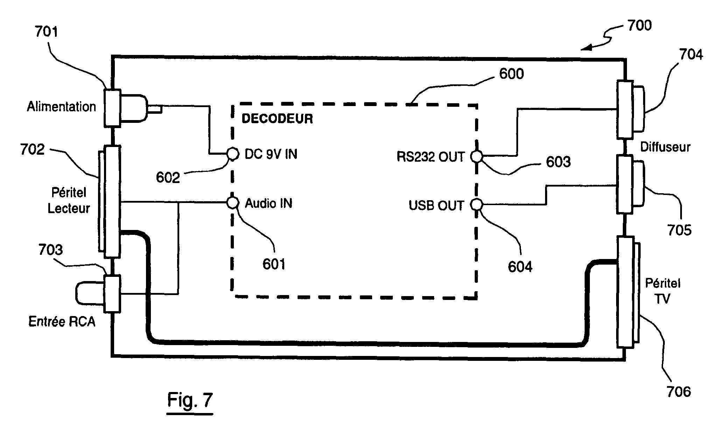

Comme illustré par la figure 7, le dispositif de décodage 600 peut être implémenté dans un boîtier 700, présentant dans un mode de réalisation particulier les éléments d'entrées/sorties suivants :
- une prise péritel 702 à connecter à un lecteur DVD ou VHS ;
- une prise péritel 706 à connecter à un téléviseur ;
- une prise RCA 703 d'entrée d'une voie audio seule ;
- une prise DB9 704 pour la connexion RS232 à un appareil de restitution sensoriel ;
- une prise USB 705 pour la connexion à un appareil de restitution sensoriel ; et
- une prise coaxiale 701 d'alimentation de type adaptateur 9V.

On notera que l'invention ne se limite pas à une implantation purement matérielle mais qu'elle peut aussi être mise en oeuvre sous la forme d'une séquence d'instructions d'un programme informatique ou toute forme mixant une partie matérielle et une partie logicielle. Dans le cas où l'invention est implantée partiellement ou totalement sous forme logicielle, la séquence d'instructions correspondante pourra être stockée dans un moyen de stockage amovible (tel que par exemple une disquette, un CD-ROM ou un DVD-ROM) ou non, ce moyen de stockage étant lisible partiellement ou totalement par un ordinateur ou un microprocesseur.

### 6.2 Structure d'une trame sensorielle

Le signal multimédia généré selon l'invention peut être lu par des appareils multimédias, tels que les magnétoscopes, les lecteurs DVD, les micro-ordinateurs, les récepteurs radio, les récepteurs de télévision par satellite, les récepteurs de télévision hertzienne, les récepteurs de télévision numérique terrestre, ou encore les récepteurs de flux vidéos par liaison Internet.

Comme déjà indiqué, le signal multimédia de l'invention comprend des voies portant des données classiques et au moins une voie portant des données classiques mélangées avec des trames sensorielles. Il n'y a pas d'ajout d'une voie spécifique.

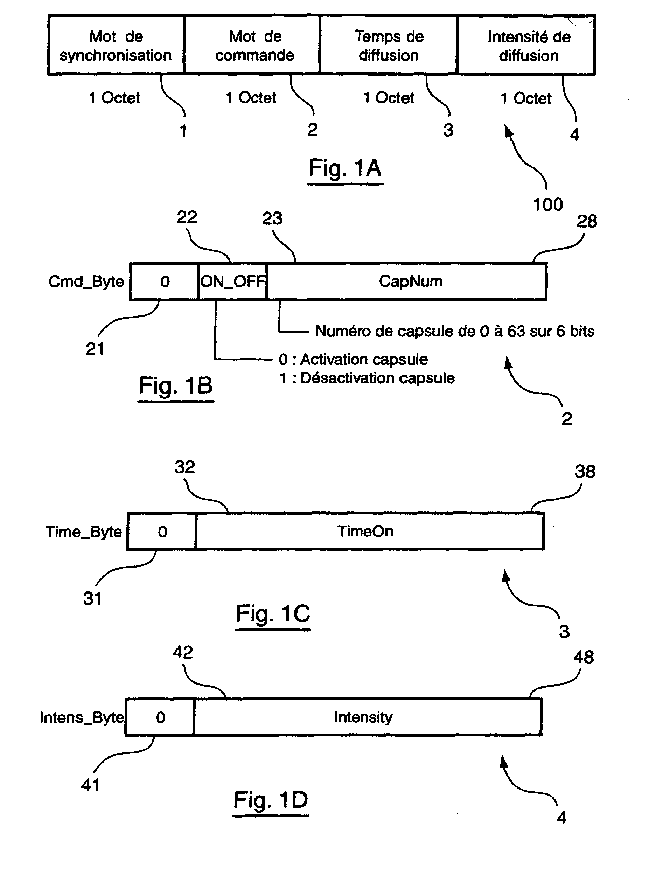

On présente de façon schématique, en relation avec la figure 1a, la structure d'une trame sensorielle 100 selon un mode de réalisation préférentiel de l'invention, dans lequel ces trames sont insérées dans un flux audio.

Dans ce mode de réalisation, la trame 100 selon l'invention comprend les quatre mots suivants, codés par exemple selon un codage de type Manchester :
- un mot de synchronisation et d'identification 1 (aussi appelé par la suite séquence de bits de synchronisation) codé sur un octet (soit 8 bits). Ce mot de synchronisation permet de marquer le début de la trame 100. Lorsque le dispositif de pilotage de la restitution des effets sensoriels (qui peut être intégré au lecteur ou fourni sous la forme d'un module indépendant), rencontre un tel mot de synchronisation, il sait directement qu'il est en présence d'une trame sensorielle, qui doit être traitée en parallèle à la restitution du flux audio. Dans le présent mode de réalisation, le mot de synchronisation 1 a pour valeur « FFh » (valeur hexadécimale) ;
- un mot de commande 2 (aussi appelé par la suite information d'aiguillage) correspondant à un identifiant d'un appareil de restitution d'effet sensoriel, ou à un élément (par exemple une cartouche ou capsule) d'un tel appareil. Comme l'illustre la figure 1b, le mot de commande 2 est codé sur un octet (soit 8 bits). Dans le mode de réalisation illustré, le bit de poids fort 21 a systématiquement pour valeur «0» (ainsi on se distingue très clairement du mot de synchronisation 1). La valeur du bit voisin 22 permet d'autoriser (valeur « 0 ») ou non (valeur « 1 ») l'activation de l'appareil de restitution d'effet sensoriel identifié. La valeur formée par les six bits suivants 23 à 28 précise le numéro d'un élément de l'appareil identifié (par exemple un numéro de capsule de parfum) à activer. Ces six bits permettent une numérotation de 0 à 63 ;
- un mot de temporisation 3 correspondant à une information représentative d'une durée d'activation. Comme l'illustre la figure 1c, le mot de temporisation 3 est codé sur un octet (soit 8 bits). Dans le mode de réalisation illustré, le bit de poids fort 31 a pour valeur « 0 » (ainsi on se distingue très clairement du mot de synchronisation 1). La valeur formée par les sept bits suivants 32 à 38 indique un temps de diffusion en dixièmes de secondes. La diffusion pourra donc être programmée de 0,1s à 12,8s ; et
- un mot d'intensité 4 correspondant à une information représentative d'une intensité de diffusion. Comme l'illustre la figure 1d, le mot d'intensité 4 est codé sur un octet (soit 8 bits). Dans le mode de réalisation illustré, le bit de poids fort 41 a pour valeur «0» (ainsi on se distingue très clairement du mot de synchronisation 1). La valeur formée par les sept bits suivants 42 à 48 indique l'intensité de diffusion en dixièmes de secondes. La diffusion pourra donc être programmée de 0,1s à 12,8s.

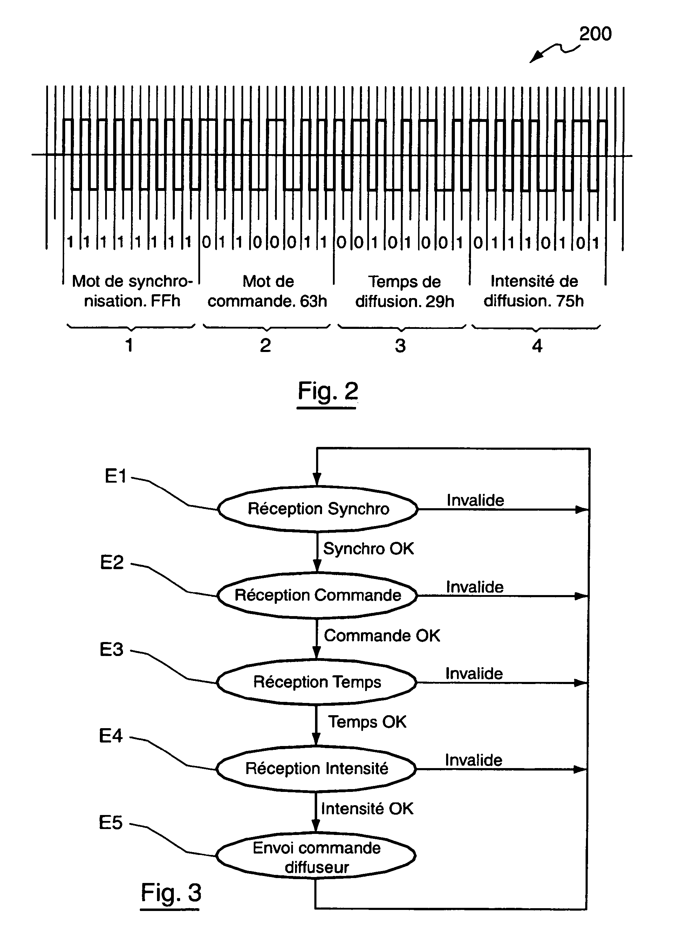

La figure 2 illustre une trame sensorielle 200 circulant sur une voie audio selon un mode de réalisation particulier de l'invention. Dans ce mode de réalisation, le mot de synchronisation 1 a pour valeur « FFh », le mot de commande 2 a pour valeur « 63h », le mot de temporisation 3 a pour valeur « 29h », et le mot d'intensité 4 a pour valeur « 75h ». En d'autres termes, la trame sensorielle 200 permet de commander l'activation d'une capsule numérotée 35 pendant 41 secondes avec une intensité de diffusion de 117 sur 127. On notera que la fréquence de communication série sur la voie audio est de 2205 Hz. Ainsi, chaque mot formant la trame sensorielle 200 est constitué de 20 échantillons. Bien entendu, dans un autre mode de réalisation, une autre fréquence de communication peut être envisagée. (par exemple une fréquence de 8820 Hz (soit 5 échantillons par mot) ou de 4410 Hz (soit 10 échantillons par mot)).

### 6.3 Décodage d'une trame sensorielle

Comme illustré sur la figure 3, le principe du décodage d'une trame sensorielle est une machine à états. Chaque état correspond à la réception d'un des mots de la trame sensorielle :
- le premier état E1 correspond à la réception du mot de synchronisation 1 (en référence à la figure 1a) ;
- le deuxième état E2 à la réception du mot de commande 2 ;
- le troisième état E3 à la réception du mot de temporisation 3 ; et
- le quatrième état E4 à la réception du mot d'intensité 4.

On passe d'un état à un autre lorsque le mot reçu est validé. Pour être validé, un mot doit posséder le bon format. Dans un mode de réalisation préférentiel, pour être validés, le mot de synchronisation 1 doit avoir la valeur « FFh » et les mots de commande 2, de temporisation 3 et d'intensité 4 doivent avoir leur bit de poids fort 21, 31 et 41 à « 0 ».

Il est à noter que toute réception d'un mot invalide dans une phase quelconque de fonctionnement entraîne le retour à l'état initial de recherche d'un mot de synchronisation.

De façon plus détaillée, à chaque réception d'un mot (soit 8 bits) de la trame sensorielle (c'est-à-dire les états E1, E2, E3 et E4 précités), on met en oeuvre un décodage « bit par bit » selon une technique de décodage, inverse de la technique de codage de Manchester.

Ce décodage est donc tel que, pour un bit d'un mot reçu donné, si on détecte deux transitions dans la période d'horloge, alors le bit reçu a pour valeur « 1 », en revanche, si on détecte une seule transition dans la période d'horloge, alors le bit reçu a pour valeur « 0 ». Par transition, on entend ici et dans tout le document, une commutation d'un signal d'un niveau positif « 1 » vers un niveau négatif « -1 », ou inversement.

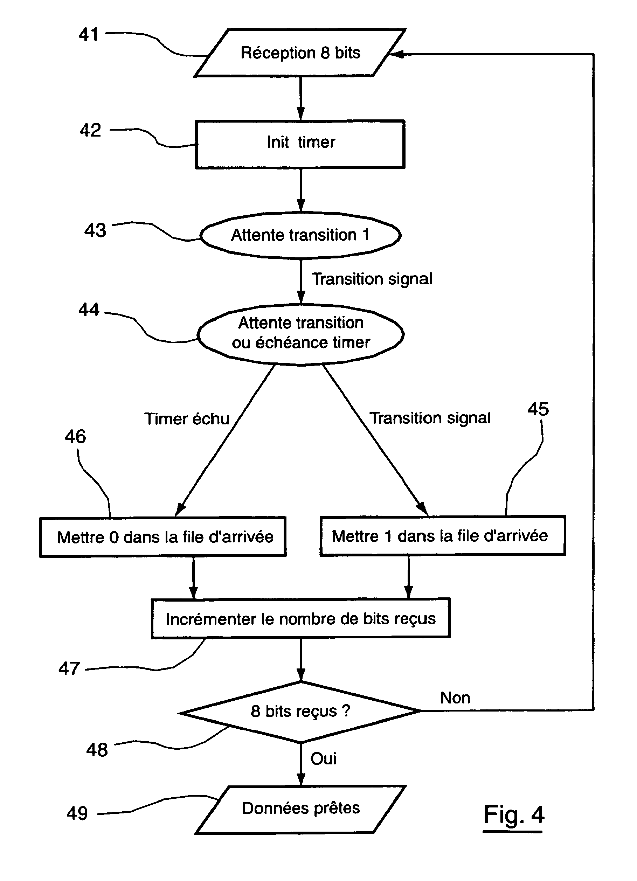

La figure 4 illustre l'enchaînement successif des étapes de décodage d'un mot selon un mode de réalisation préférentiel de l'invention.

Lors d'une première étape 41, on reçoit un bit d'un mot d'une trame sensorielle.

Lors d'une étape 42, on déclenche une temporisation d'une durée T=t1+t2, où t1 correspond au temps nécessaire pour détecter une première transition et t2 correspond au temps nécessaire pour détecter une deuxième transition dans la période d'horloge T. Dans un mode de réalisation particulier, la temporisation est réalisée au moyen d'un compteur (« timer »).

Ensuite lors d'une étape 43 (c'est-à-dire à l'instant t1), on vérifie la présence d'une première transition.

Lors d'une étape 44 (c'est-à-dire à l'instant t2), on vérifie la présence d'une deuxième transition, de sorte que si une deuxième transition est détectée à l'instant t2 et qu'une première transition a été détectée à l'instant t1 (étape 43), alors on passe à une étape 45, sinon on passe à une étape 46.

Lors de l'étape 45, on met la valeur « 1 » (valeur du bit reçu) dans un registre à décalage, puis on passe à une étape 47.

Lors de l'étape 46, on met la valeur « 0 » (valeur du bit reçu) dans le registre à décalage, puis on passe à l'étape 47.

Lors de l'étape 47, on incrémente d'une unité le nombre de bits reçus.

Ensuite lors d'une étape 48, on vérifie le nombre de bits reçus, de sorte que si le nombre de bits reçus est égal à 8 (i.e. un mot étant composé de 8 bits), alors on passe à une étape 49, sinon on retourne à l'étape 41.

Enfin lors de l'étape 49, on obtient un mot décodé.

### 6.4 Exemple d'application

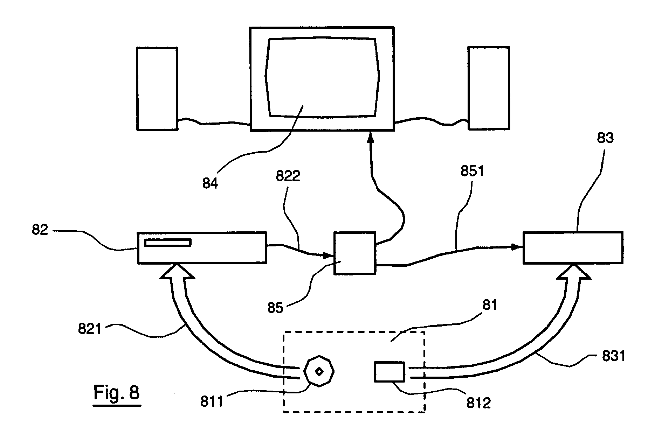

La figure 8 présente un exemple de mise en oeuvre de l'invention. L'utilisateur a acheté un film 81, livré sous la forme d'un boîtier comprenant un DVD 811 et une ou plusieurs capsules 812. Pour jouer le film et bénéficier des effets sensoriels, il place (821) le DVD dans un lecteur classique 82 et (831) les capsules dans un dispositif 83 destiné à produire les effets sensoriels souhaités, en activant les capsules (de tels dispositifs sont connus par eux-mêmes).

Le signal 822 délivré par le lecteur 82 n'est pas directement dirigé vers le téléviseur 84, mais vers un boîtier spécifique 85, via une liaison Péritel. Ce boîtier 85 scrute le ou les flux dans lesquels des trames sensorielles peuvent être présentes, les extrait, les analyse, et dirige les commandes correspondantes (851) vers le dispositif 83, qui génère les effets sensoriels souhaités.

En parallèlement, le signal 822 est redirigé vers le téléviseur 84, par liaison Péritel, de façon que le téléviseur (plus généralement tout élément multimédia) restitue le film présent sur le DVD.

Avantageusement, le boîtier 85 peut adapter les effets techniques en fonction d'informations d'ambiance qu'il mesure, telles que l'humidité ambiante, la température, la luminosité...

Il faut noter par ailleurs que les effets sensoriels ne sont pas limités à la diffusion d'odeurs. Le ou les dispositifs 83 peuvent également agir sur des aspects d'humidité, de température, de luminosité, de son, de lumière, ou de tout autre effet adéquat.

## Revendications

1. Procédé de génération d'un signal multimédia capable de piloter une restitution temporelle d'au moins un effet sensoriel dans un dispositif de restitution d'effets sensoriels, ledit signal multimédia comprenant au moins une voie portant des données audio et/ou vidéo, comportant des trames de commande, dites trames sensorielles, parmi les données de ladite voie, chacune desdites trames sensorielles comprenant une séquence de bits spécifique à la nature, l'intensité et le temps de restitution de l'effet sensoriel,
**caractérisé en ce que** les trames sensorielles comprennent également une séquence de bits de synchronisation et d'identification et au moins un champ de commande,
de façon que des moyens de décodage traitant ladite voie restituent d'une part les données audio/vidéo qu'elle porte, et extraient lesdites trames sensorielles d'autre part, après avoir fait une mise en forme du signal multimédia par hystérésis puis conformation en signal logique 0 ou 1, pour les diriger à tout moment, dès la détection de la présence d'un mot de synchronisation, vers au moins un appareil de restitution sensorielle.

2. Procédé selon la revendication 1, **caractérisé en ce qu'**une trame sensorielle comprend une information d'aiguillage comprenant au moins un identifiant d'appareil de restitution d'effet sensoriel et/ou d'un élément d'un tel appareil.

3. Procédé selon l'une quelconque des revendications 1 et 2, **caractérisé en ce que** chaque trame sensorielle comprend au moins les champs suivants :
- au moins une information d'aiguillage, correspondant à un identifiant d'au moins appareil de restitution d'effet sensoriel, et/ou d'au moins un élément d'un tel appareil ;
- une information représentative d'une durée d'activation ; et
- une information représentative d'une intensité dudit effet sensoriel.

4. Procédé selon la revendication 3, **caractérisé en ce que** chaque champ est codé sur un octet.

5. Procédé selon l'une quelconque des revendications 1 à 4, **caractérisé en ce que** lesdites trames sensorielles sont codées selon un codage de Manchester.

6. Signal multimédia capable de piloter une restitution temporelle d'au moins un effet sensoriel dans un environnement audiovisuel, ledit signal multimédia comprenant au moins une voie portant des données audio et/ou vidéo,
**caractérisé en ce qu'**au moins une desdites voies porte des trames de commande, dites trames sensorielles, parmi les données de ladite voie,
chacune desdites commandes sensorielles comprenant une séquence de bits de synchronisation et d'identification et au moins un champ de commande,
de façon que des moyens de décodage traitant ladite voie restituent d'une part les données audio/vidéo qu'elle porte, et extraient lesdites trames sensorielles d'autre part, après avoir fait une mise en forme du signal multimédia par hystérésis puis conformation en signal logique 0 ou 1, pour les diriger vers au moins un appareil de restitution sensorielle.

7. Moyen de stockage, éventuellement totalement ou partiellement amovible, contenant au moins un signal multimédia lisible par un ordinateur ou un appareil multimédia et généré selon le procédé de génération selon la revendication 1.

8. Produit programme d'ordinateur, **caractérisé en ce qu'**il comprend des instructions de code de programme pour l'exécution des étapes du procédé selon l'une quelconque des revendications 1 à 5, lorsque ledit programme est exécuté sur un ordinateur.

9. Moyen de stockage, éventuellement totalement ou partiellement amovible, lisible par un ordinateur, stockant un jeu d'instructions exécutables par ledit ordinateur pour mettre en oeuvre le procédé selon l'une quelconque des revendications 1 à 5

10. Procédé de restitution temporelle d'au moins un effet sensoriel, **caractérisé en ce qu'**il comprend les étapes suivantes :
- réception d'un signal multimédia capable d'assurer une restitution temporelle d'au moins un effet sensoriel dans un environnement audiovisuel, ledit signal multimédia comprenant au moins une voie portant des données audio et/ou vidéo, au moins une desdites voies portant des trames de commande, dites trames sensorielles, parmi les données de ladite voie,
chacune desdites commandes sensorielles comprenant une séquence de bits de synchronisation et d'identification et au moins un champ de commande, après avoir fait une mise en forme du signal multimédia par hystérésis puis conformation en signal logique 0 ou 1 ;
- détection d'une séquence de bits de synchronisation et d'identification dans ladite voie, et par conséquent d'une trame sensorielle ;
- extraction de la trame sensorielle détectée, et aiguillage vers au moins un appareil de restitution sensorielle et/ou au moins un élément d'un tel appareil.

11. Procédé selon la revendication 10, **caractérisé en ce qu'**il comprend une étape de validation desdites trames, par analyse d'au moins ladite séquence de bits de synchronisation et d'identification, délivrant une information de détection positive.

12. Procédé selon l'une quelconque des revendications 10 et 11, **caractérisé en ce qu'**il comprend une étape d'activation et/ou de paramétrage d'au moins un appareil de restitution d'effet sensoriel, en fonction de données délivrées par au moins un capteur de condition ambiante.

13. Dispositif de restitution temporelle d'au moins un effet sensoriel, **caractérisé en ce qu'**il comprend :
- des moyens de réception d'un signal multimédia capable d'assurer une restitution temporelle d'au moins un effet sensoriel dans un environnement audiovisuel, ledit signal multimédia comprenant au moins une voie portant des données audio et/ou vidéo, au moins une desdites voies portant des trames de commande, dites trames sensorielles, parmi les données de ladite voie,
chacune desdites commandes sensorielles comprenant une séquence de bits de synchronisation et d'identification et au moins un champ de commande, après avoir fait une mise en forme du signal multimédia par hystérésis puis conformation en signal logique 0 ou 1 ;
- des moyens de détection d'une séquence de bits de synchronisation et d'identification dans ladite voie, et par conséquent d'une trame sensorielle ;
- des moyens d'extraction de la trame sensorielle détectée, et aiguillage vers au moins un appareil de restitution sensorielle et/ou au moins un élément d'un tel appareil.

14. Dispositif selon la revendication 13, **caractérisé en ce qu'**il comprend uniquement des moyens de récupération de ladite voie et de traitement desdites trames sensorielles, l'ensemble dudit signal multimédia étant traité indépendamment par des moyens de restitution d'un signal multimédia.

15. Produit programme d'ordinateur, **caractérisé en ce qu'**il comprend des instructions de code de programme pour l'exécution des étapes du procédé selon l'une quelconque des revendications 10 à 12, lorsque ledit programme est exécuté sur un ordinateur.

16. Moyen de stockage, éventuellement totalement ou partiellement amovible, lisible par un ordinateur, stockant un jeu d'instructions exécutables par ledit ordinateur pour mettre en oeuvre le procédé selon l'une quelconque des revendications 10 à 12.

## Claims

1. Method for generation of a multimedia signal able to pilot a temporal reproducing of at least one sensorial effect in a reproducing apparatus of sensorial effects, the aforesaid multimedia signal including at least one track carrying audio and/or video data containing control frames, called sensorial frames, among the data of the aforesaid track, each of the sensorial frames including a sequence of bits that are specific to the nature, intensity and reproducing time of the sensorial effect, **characterized in that** the sensorial frames also include a sequence of synchronisation and identification bits and at least one control field,
so that some decoding mediums processing the aforesaid track reproduce the audio/video data it carries on the one hand, and extract the aforesaid sensorial frames on the other hand, after having formated the multimedia signal by hysteresis, then conformation in logical signal 0 or 1, in order to send them at any time, as soon as it detects the presence of an alignment word, towards at least one sensorial reproducing device.

2. Method according to claim 1, **characterized in that** one sensorial frame includes a switching information including at least one identifier of a reproducing device of sensorial effect and/ or an element of such a device.

3. Method according to any of claims 1 and 2, **characterized in that** each sensorial frame includes at least the following fields :
- at least one switching information, corresponding to an identifier of at least one reproducing device of sensorial effect and/ or an element of such a device;
- an information representative of an activation duration; and
- an information representative of an intensity of the aforesaid sensorial effect.

4. Method according to claim 3, **characterized in that** each field is coded on one byte.

5. Method according to any of the claims 1 to 4, **characterized in that** the aforesaid sensorial frames are coded according to a Manchester coding.

6. Multimedia signal able to pilot a temporal reproducing of at least one sensorial effect in an audio-visual environment, the aforesaid multimedia signal including at least one track carrying audio and/or video data,
**characterized in that** at least one of the aforesaid tracks carries control frames, called sensorial frames, among the data of the aforesaid track,
each of the aforesaid sensorial frames including a sequence of synchronisation and identification bits, and at least one control field,
so that some decoding mediums processing the aforesaid track reproduce the audio/video data it carries on the one hand, and extract the aforesaid sensorial frames on the other hand, after having formated the multimedia signal by hysteresis, then conformation in logical signal 0 or 1, in order to send them towards at least one sensorial reproducing device.

7. Storage medium, possibly totally or partially removable, including at least one multimedia signal readable by a computer or by a multimedia device, and generated according to the generation process according to claim 1.

8. Computer program product, **characterized in that** it includes program code instructions to run the steps of the process, according to any of the claims 1 to 5, when the aforesaid program is run on a computer.

9. Storage medium possibly totally or partially removable, readable by a computer, storing a set of instructions executable by the aforesaid computer, in order to implement the process, according to any of the claims 1 to 5.

10. Process of temporal reproducing of at least one sensorial effect, **characterized in that** it includes the following steps :
- Reception of a multimedia signal able to provide a temporal reproducing of at least one sensorial effect in an audio-visual environment, the aforesaid multimedia signal including at least one track carrying audio and/or video data, at least one of the aforesaid tracks carrying control frames, called sensorial frames, among the data of the aforesaid track,
each of the aforesaid sensorial frames including a sequence of synchronisation and identification bits, and at least one control field, after having formated the multimedia signal by hysteresis, then conformation in logical signal 0 or 1;
- Detection of a sequence of synchronisation and identification bits in the aforesaid track, and consequently a sensorial frame;
- Extraction of the sensorial frame that has been detected, and switching towards at least one sensorial reproducing device and/or an element of such a device.

11. Process according to claim 10 **characterized in that** it includes a validation step of the aforesaid frames, by analysis of at least the aforesaid sequence of synchronisation and identification bits, delivering a positive information of detection.

12. Process according to any of the claims 10 and 11, **characterized in that** it includes a step of activation and/or configuration of at least one sensorial reproducing device, according to data delivered by at least one sensor of ambient condition.

13. Temporal reproducing apparatus of at least one sensorial effect, **characterized in that** it includes :
- reception mediums of a multimedia signal able to provide a temporal reproducing of at least one sensorial effect in an audio-visual environment, the aforesaid multimedia signal including at least one track carrying audio and/or video data, at least one of the aforesaid tracks carrying control frames, called sensorial frames, among the data of the aforesaid track,
each of the aforesaid sensorial commands including a sequence of synchronisation and identification bits and at least one control field, after having formated the multimedia signal by hysteresis, then conformation in logical signal 0 or 1;
- detection mediums of a sequence of synchronisation and identification bits in the aforesaid track, and consequently of a sensorial frame;
- extraction mediums of the sensorial frame, once it has been detected, and switching towards at least a sensorial reproducing device and/or at least one element of such a device.

14. Apparatus according to claim 13, **characterized in that** it only includes recovering mediums of the aforesaid track and processing mediums of the aforesaid sensorial frames, the whole of the aforesaid multimedia signal being processed separately by some reproducing mediums of a multimedia signal.

15. Computer program product, **characterized in that** it includes program code instructions to run the steps of the process according to any of the claims 10 to 12, when the aforesaid program is run on a computer.

16. Storage medium, possibly totally or partially removable, readable by a computer, storing a set of instructions executable by the aforesaid computer, in order to implement the process according to any of the claims 10 to 12.

## Patentansprüche

1. Methode zur Generierung eines Multimedia-Signals, das fähig ist, eine zeitliche Ausgabe von wenigstens einem sensorischen Effekt in einem Ausgabegerät für sensorische Effekte zu steuern, wobei dieses Multimedia-Signal mindestens eine Spur umfasst, die Audio- und/oder Videodaten enthält, die unter den Daten dieser Spur Befehlsframes umfasst, die sogenannten sensorischen Frames, wobei jeder dieser sensorischen Frames ebenfalls eine spezifische Bit-Sequenz für die Art, die Intensität und die Dauer der Ausgabe des sensorischen Effekts umfasst,
**dadurch gekennzeichnet, dass** die sensorischen Frames auch eine Bit-Sequenz zur Synchronisation und Identifizierung und wenigstens eine Steuerfeld umfassen, damit die Dekodiervorrichtungen, die diese Spur bearbeiten, sowohl die darauf vorhandenen Audio-/Videodaten als auch die sensorischen Frames extrahieren, nachdem das Multimedia-Signal durch Hysteresis geformt wurde, dann Formung in ein logisches Signal 0 oder 1, um sie jederzeit, sobald die Präsenz eines Synchronisationsworts erkannt wird, an wenigsten ein sensorisches Ausgabegerät weiterzuleiten.

2. Verfahren nach Anspruch 1, **dadurch gekennzeichnet, dass** ein sensorischer Frame eine Verweisinformation enthält, die wenigstens einen Identifikator für das Ausgabegerät für sensorische Effekte und/oder ein Element eines solchen Gerätes umfasst.

3. Verfahren nach einem der Ansprüche 1 und 2, **dadurch gekennzeichnet, dass** jeder sensorischer Frame wenigstens eines der folgenden Felder umfasst:
- wenigstens eine Verweisinformation, die der Kennung von zu mindestens einem Ausgabegerät für sensorische Effekte und/oder einem Element eines solchen Gerätes entspricht;
- eine für die Dauer einer Aktivierung repräsentative Information und
- eine für eine Intensität der sensorischen Wirkung repräsentative Information des betreffenden sensorischen Effekts.

4. Verfahren nach Anspruch 3, **dadurch gekennzeichnet, dass** jedes Feld als ein Byte kodiert ist.

5. Verfahren nach einem der Ansprüche 1 bis 4, **dadurch gekennzeichnet, dass** die besagten sensorische Frames gemäß dem Manchester-Code kodiert sind

6. Multimedia-Signals, das fähig ist, eine zeitliche Ausgabe von wenigstens einem sensorischen Effekt in einer audiovisuellen Umgebung anzusteuern, wobei das besagte Multimedia-Signal mindestens eine Spur umfasst, die Audio- und/oder Videodaten enthält,
**dadurch gekennzeichnet, dass** die besagte Spur Befehlsframes umfasst, die sogenannten sensorischen Frames, wobei unter den Daten dieser Spur,
jeder dieser sensorischen Frames eine spezifische Bit-Sequenz zur Synchronisation und Identifizierung umfasst, und wenigstens eine Steuerfeld,
damit die Dekodiervorrichtungen, die diese Spur bearbeiten, sowohl die darauf vorhandenen Audio-/Videodaten als auch die sensorischen Frames extrahieren, nachdem das Multimedia-Signal durch Hysteresis geformt wurde, dann Formung in ein logisches Signal 0 oder 1, um sie an wenigsten ein sensorisches Ausgabegerät weiterzuleiten.

7. Speichermedium, eventuell ganz oder teilweise abnehmbar, das mindestens ein Multimedia-Signal enthält, das von einem Computer oder von einem Multimediagerät lesbar ist und anspruchsgemäß gemäß dem Generierungsverfahren generiert wird.

8. Computerprogramm-Produkt, **dadurch gekennzeichnet, dass** es Anweisungen zum Programm-Code enthält, um die Schritte für das Verfahren auszuführen, gemäß einem der Ansprüche 1 bis 5, wenn das Programm auf einem Computer ausgeführt wird.

9. Speichermedium, eventuell ganz oder teilweise abnehmbar, das von einem Computer lesbar ist und das einen Befehlssatz speichert, der auf dem Computer ausführbar ist, um das Verfahren umzusetzen, gemäß einem der Ansprüche 1 bis 5.

10. Verfahren zur zeitliche Ausgabe von mindestens einem sensorischen Effekt, **dadurch gekennzeichnet, dass** es die folgenden Schritte umfasst:
- Empfang eines Multimedia-Signals, das fähig ist, eine zeitliche Ausgabe von wenigstens einem sensorischen Effekt in einer audiovisuellen Umgebung sicherzustellen, wobei das besagte Multimedia-Signal mindestens eine Spur umfasst, die Audio- und/oder Videodaten enthält, **dadurch gekennzeichnet, dass** die besagte Spur Befehlsframes umfasst, die sogenannten sensorischen Frames, wobei unter den Daten dieser Spur,
jeder dieser sensorischen Frames eine spezifische Bit-Sequenz zur Synchronisation und Identifizierung umfasst, und wenigstens eine Steuerfeld, nachdem das Multimedia-Signal durch Hysteresis geformt wurde, dann Formung in ein logisches Signal 0 oder 1,
um sie an wenigsten ein sensorisches Ausgabegerät weiterzuleiten.
- Erkennung einer Bit-Sequenz zur Synchronisation und Identifizierung der genannten Spur und folglich des sensorischen Frames;
- Extrahierung des erkannten sensorischen Frames und Weiterleitung auf wenigstens ein sensorisches Ausgabegerät und/oder ein Element eines solchen Geräts.

11. Verfahren nach Anspruch 10, **dadurch gekennzeichnet, dass** es einen Authentifizierungsschritt dieser Frames umfasst, durch die Analyse wenigstens einer Bitsequenz zur Synchronisation und Identifizierung, die die Information über eine positive Erkennung liefert.

12. Verfahren nach einem der Ansprüche 10 und 11, **dadurch gekennzeichnet, dass** es einen Aktivierungs- und / oder Parametrisierungsschritt von mindestens einem Sensoreffekt-Ausgabegerät umfasst, basierend auf den Daten, die von mindestens einem Sensor für die Umgebungsbedingungen geliefert wird.

13. Gerät zur zeitliche Ausgabe von mindestens einem sensorischen Effekt, **dadurch gekennzeichnet, dass** es folgende Elemente beinhaltet:
- Empfangsvorrichtungen für ein Multimedia-Signals, das fähig ist, eine zeitliche Ausgabe von wenigstens einem sensorischen Effekt in einer audiovisuellen Umgebung zu liefern, wobei das besagte Multimedia-Signal mindestens eine Spur umfasst, die Audio- und/oder Videodaten enthält, wobei die besagten Spuren unter den Daten dieser Spur,
Befehlsframes umfassen, die sogenannten sensorischen Frames, wobei jeder dieser sensorischen Befehle eine Bit-Sequenz zur Synchronisation und Identifizierung umfasst, und wenigstens eine Steuerfeld, nachdem das Multimedia-Signal durch Hysteresis geformt wurde, dann Formung in ein logisches Signal 0 oder 1;
- Erkennungsvorrichtungen für eine Bit-Sequenz zur Synchronisation und Identifizierung der genannten Spur und folglich des sensorischen Frames;
- Extrahierungsvorrichtungen für den erkannten sensorischen Frame und Weiterleitung auf wenigstens ein sensorisches Ausgabegerät und/oder wenigstens ein Element eines solchen Geräts.

14. Vorrichtung nach Anspruch 13, **dadurch gekennzeichnet, dass** es ausschließlich Ausgabesysteme für die genannte Spur und die Bearbeitung der genannten sensorischen Frames umfasst, wobei die Gesamtheit des Multimediasignals getrennt von Ausgabesystemen für ein Multimediasignal bearbeitet wird.

15. Computerprogramm-Produkt, **dadurch gekennzeichnet, dass** es Anweisungen zum Programm-Code enthält, um die Schritte für das Verfahren auszuführen, gemäß einem der Ansprüche 10 bis 12, wenn das Programm auf einem Computer ausgeführt wird.

16. Speichermedium, eventuell ganz oder teilweise abnehmbar, das von einem Computer lesbar ist und das einen Befehlssatz speichert, der auf dem Computer ausführbar ist, um das Verfahren umzusetzen, gemäß einem der Ansprüche 10 bis 12.
